# EUROPEAN PATENT APPLICATION

(11) **EP 2 860 608 A1**
(43) Date of publication of application: **15.04.2015**
(21) Application number: 14170671.3
(22) Date of filing: 30.05.2014
(51) Int. Cl.: G06F 3/01, H04M 1/725

(54) **Mobile terminal, display apparatus and controlling methods thereof**

(30) Priority: 11.10.2013 KR 20130121223
(71) Applicant: Samsung Electronics Co., Ltd, Gyeonggi-do 443-742 (KR)
(72) Inventor: Kang, Kun-sok, Gyeonggi-do (KR); Song, Hak-sup, Gyeonggi-do (KR); Lee, Sung-kyu, Gyeonggi-do (KR)
(74) Representative: Taor, Simon Edward William

(57) **Abstract**

A mobile terminal, a display apparatus, and their associated controlling methods are provided to control a display mode of the display apparatus in a general mode, which displays a content shareable with a third party, and in a security mode, which displays a content non-shareable with the third party, according to a user's security level. The mobile terminal includes a communicator to communicate with an external display apparatus to provide a personalization function; a sensor to sense a position of the mobile terminal, and a controller to determine the display mode of the display apparatus based on the position of the mobile terminal sensed by the sensor, and transmit display mode instruction information including the determined display mode to the display apparatus through the communicator.

## Description

The present general inventive concept relates to a mobile terminal, a display apparatus having a personalization function, and controlling methods thereof, which can control the display apparatus that performs a personalization function to change a display mode from a security mode to a general mode, or vice versa, depending on a posture or position of the mobile terminal. Specifically, in the general mode, the display apparatus displays a content that is shareable with a third party, and in the security mode, the display apparatus displays a content that is non-shareable with a third party.

According to the recent development of the electronic communication industry, many electronic devices including mobile terminals, such as smart phones, and display apparatuses, such as digital television (TV), perform multi-functions such as Internet communication and information search as well as their original functions.

In particular, the mobile terminals and the display apparatuses are linked to each other in a wired manner or wirelessly, and thus, the mobile terminals control the display apparatuses remotely, or contents of the mobile terminals are displayed in a screen of the display apparatuses.

For instance, smart TVs capable of receiving multimedia contents including video/audio data and packet data through the internet have been widespread, and therefore, studies are actively conducted in order to provide a display apparatus having a personalization function to personalize and manage functions of the display apparatus, such as the Internet communication and information search, according to a user's determination.

Such a personalization function display apparatus provides their users with user accounts that are separately assigned to each user, and allows the users to use functions of the display apparatus through the user accounts. Accordingly, any user who wishes to log in with his/her user account is subject to user authentication.

The user authentication is performed through facial recognition using cameras, voiceprint recognition using microphones, fingerprint recognition using a fingerprint recognition device, and input of a user authentication code such as ID and password, but is not limited thereto. According to the foregoing user authentication, the personalization function display apparatus allows an authenticated user to log in with his/her user account and use a content that has been personalized in advance by the user.

In some cases, after a higher security level content has already been set up in the personalization function display apparatus, a user may want a particular displayed content to be displayed under a lower security level. However, conventional personalization function display apparatuses cannot identify the displayed content by its security level and then promptly and naturally change an existing security level to the identified security level.

More specifically, minors need to be prohibited from accessing sexual or violent broadcasting programs, harmful websites, and other inappropriate contents, which may be accessible to an authorized adult user. However, under the conventional technology, if a third party, such as a minor, suddenly enters a viewing space of the display apparatus while an authorized user accesses or views a higher security level content that should not be exposed to the third party, such as adult contents or payment screen, the only way to stop displaying the higher security level content without turning off the display apparatus is to change a current screen to another screen by performing several manipulation steps so that the third party is not exposed to the higher security level content. However, performing the manipulation steps not only requires a predetermined time period to complete, and therefore, is inconvenient, but also makes the concerned parties feel more confused and uncomfortable.

The present general inventive concept provides a mobile terminal, a display apparatus, and controlling methods thereof, which promptly and naturally changes a content displayed by the display apparatus with a simple handling or motion when the displayed content needs to be changed promptly.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing a mobile terminal including a communicator to communicate with an external display apparatus having a personalization function, a sensor to sense a position of the mobile terminal, and a controller to determine a display mode of the display apparatus based on the position of the mobile terminal sensed by the sensor, and transmit display mode instruction information comprising the determined display mode to the display apparatus through the communicator.

The position of the mobile terminal may include a general position that allows the user to instruct the display apparatus to display a content that is shareable with a third party, and a security position that allows the user to instruct the display apparatus to display a content that is non-shareable with a third party.

The general position may include one of a bottom-up position in which a bottom of the mobile terminal is located upward, a turned-over position in which a front surface of the mobile terminal faces down, and one of a northward position in which an upper part of the mobile terminal is directed to the north at a first angle and a southward position in which the upper part of the mobile terminal is directed to the south at a second angle, and the security position may include one of a normal position in which the upper part of the mobile terminal is located upward, a lying position in which the front surface of the mobile terminal faces up, and the other of the northward position in which the upper part of the mobile terminal is directed to the north at the first angle and the southward position in which the upper part of the mobile terminal is directed to the south at the second angle.

The general position may comprise one of a bottom-up position in which a bottom of the mobile terminal is located upward, a turned-over position in which a front surface of the mobile terminal faces down, and one of a first compass position in which an upper part of the mobile terminal is directed to a first compass point at a first angle and a second compass position in which the upper part of the mobile terminal is directed to a second compass point at a second angle. The security position may comprise one of a normal position in which the upper part of the mobile terminal is located upward, a lying position in which the front surface of the mobile terminal faces up, and the other of the first compass position in which the upper part of the mobile terminal is directed to the first compass point at the first angle and the second compass position in which the upper part of the mobile terminal is directed to the second compass point at the second angle.

The position of the mobile terminal may be changed by physically turning or relocating the mobile terminal by a user, or by inputting a screen changing command to the mobile terminal to change an orientation of a screen of the mobile terminal.

The sensor may include at least one of an accelerometer, a gyro sensor and a geomagnetic sensor.

The sensor may further include an additional sensor to sense a change in direction of the mobile terminal.

The display mode of the display apparatus may include a general mode in which the display apparatus displays a content that is shareable with the third party, and a security mode in which the display apparatus displays a content that is non-shareable with the third party.

The controller may determine that the display mode of the display apparatus is the general mode when the position of the mobile terminal is the general position.

In the general mode, only a first content that is shareable with the third party may be displayed.

The first content may include at least one of a normal broadcasting channel and a normal video on demand (VOD) content.

The controller may determine that the display mode of the display apparatus is the security mode when the position of the mobile terminal is the security position.

According to a user's security level, the controller may determine in more detail that the security mode is a first security mode in which the display apparatus displays a second content that is non-shareable with the third party, and a second security mode in which the display apparatus displays a third content that is non-shareable with the third party.

The controller may determine that the security mode is the first security mode when the user's security level is a second security level, and determine that the security mode is the second security mode when the user's security level is a third security level.

The second security level may include a level that is granted to a minor who accesses the display apparatus in the security position, and the third security level may include a level that is granted to an adult who accesses the display apparatus in the security position.

The second content may include at least one of personal schedule information and a personalized screen, and the third content may include at least one of a content inaccessible to minors and a personal information protection content.

The display mode instruction information may include at least two of a user authentication code, a user name, a security flag which identifies whether the determined display mode is a security mode or a general mode, and a security level that is granted to a user of the mobile terminal.

The mobile terminal may further include a cradle having a near field communication (NFC) reader to transmit a user profile of the mobile terminal stored in an NFC tag of the mobile terminal to the display apparatus and thus causing the display apparatus to authenticate the user profile when the mobile terminal is tagged, and the cradle wirelessly charges the mobile terminal.

The foregoing and/or other features and utilities of the present general inventive concept may also be achieved by providing a controlling method of a mobile terminal including sensing a position of the mobile terminal; determining a display mode of a display apparatus having a personalization function, based on the sensed position of the mobile terminal, and transmitting display mode instruction information comprising the determined display mode to the display apparatus.

The sensing may include one of determining a general position to instruct the display apparatus to display a content that is shareable with a third party, and sensing a security position to instruct the display apparatus to display a content that is non-shareable with a third party.

The determining may include one of determining that the display mode of the display apparatus is a general mode in which the display apparatus displays a content that is shareable with the third party, and determining that the display mode of the display apparatus is a security mode in which the display apparatus displays a content that is non-shareable with the third party.

The determining that the display mode of the display apparatus is the general mode may include determining that the display mode of the display apparatus is the general mode when the position of the mobile terminal is the general position.

The determining that the display mode of the display apparatus is the security mode may include determining that the display mode of the display apparatus is the security mode when the position of the mobile terminal is the security position.

The determining that the display mode of the display apparatus is the security mode may include determining in more detail that the security mode is a first security mode in which the display apparatus displays a second content that is non-shareable with the third party, and a second security mode in which the display apparatus displays a third content that is non-shareable with the third party, according to a user's security level.

The determining in more detail may include determining that the security mode is the first security mode when the user's security level is a second security level; and determining that the security mode is the second security mode when the user's security level is a third security level.

The transmitting may include transmitting display mode instruction information comprising at least one of a security flag which identifies whether the determined display mode is a security mode or a general mode and a security level that is granted to a user of the mobile terminal, to the display apparatus.

The foregoing and/or other aspects features and utilities of the present general inventive concept may also be achieved by providing a mobile terminal including a communicator to communicate with an external display apparatus having a personalization function, a sensor to sense a position of the mobile terminal; and a controller to transmit display mode determination information comprising the sensed position of the mobile terminal to the display apparatus through the communicator for the display apparatus to determine a display mode of the display apparatus based on the position of the mobile terminal sensed by the sensor.

The position of the mobile terminal may include a general position that allows the user to instruct the display apparatus to display a content that is shareable with a third party and a security position that allows the user to instruct the display apparatus to display a content that is non-shareable with a third party.

The general position may include one of a bottom-up position in which a bottom of the mobile terminal is located upward, a turned-over position in which a front surface of the mobile terminal faces down, and one of a northward position in which an upper part of the mobile terminal is directed to the north at a first angle and a southward position in which the upper part of the mobile terminal is directed to the south at a second angle, and the security position may include one of a normal position in which the upper part of the mobile terminal is located upward, a lying position in which the front surface of the mobile terminal faces up, and the other of the northward position in which the upper part of the mobile terminal is directed to the north at the first certain angle and the southward position in which the upper part of the mobile terminal is directed to the south at the second certain angle.

The general position may comprise one of a bottom-up position in which a bottom of the mobile terminal is located upward, a turned-over position in which a front surface of the mobile terminal faces down, and one of a first compass position in which an upper part of the mobile terminal is directed to a first compass point at a first angle and a second compass position in which the upper part of the mobile terminal is directed to a second compass point at a second angle. The security position may comprise one of a normal position in which the upper part of the mobile terminal is located upward, a lying position in which the front surface of the mobile terminal faces up, and the other of the first compass position in which the upper part of the mobile terminal is directed to the first compass point at the first angle and the second compass position in which the upper part of the mobile terminal is directed to the second compass point at the second angle.

The sensor may include at least one of an accelerometer, a gyro sensor, and a geomagnetic sensor.

The display mode of the display apparatus may include a general mode in which the display apparatus displays a content that is shareable with the third party and a security mode in which the display apparatus displays a content that is non-shareable with the third party.

In the general mode, a first content that is shareable with the third party may be displayed, and the security mode may include a first security mode in which the display apparatus displays a second content that is non-shareable with the third party, and a second security mode in which the display apparatus displays a third content that is non-shareable with the third party.

The first content may include at least one of a normal broadcasting channel and a normal VOD content that is shareable with the third party, the second content comprises at least one of personal schedule information and a personalized screen that is non-shareable with the third party, and the third content comprises at least one of a content inaccessible to minors and a personal information protection content that is non-shareable with the third party.

The display mode determination information may further include at least one of a user authentication code, a user name, and a security level that is granted to a user of the mobile terminal.

The mobile terminal may further include a cradle to comprise a near field communication (NFC) reader to transmit a user profile of the mobile terminal stored in an NFC tag of the mobile terminal to the display apparatus and thud cause the display apparatus to authenticate the user profile when the mobile terminal is tagged, and to wirelessly charge the mobile terminal.

An aspect of another exemplary embodiment may be achieved by providing a controlling method of a mobile terminal including: sensing a position of the mobile terminal; and transmitting display mode determination information comprising the sensed position of the mobile terminal to a display apparatus to perform a personalization function to allow the display apparatus to determine the display mode of the display apparatus based on the sensed position of the mobile terminal.

The sensing may include one of sensing a general position which allows to instruct the display apparatus to display a content that is shareable with a third party, and sensing a security position which allows to instruct the display apparatus to display a content that is non-shareable with a third party.

The sensing the general position may include sensing one of a bottom-up position in which a bottom of the mobile terminal is located upward, a turned-over position in which a front surface of the mobile terminal faces down, and one of a northward position in which an upper part of the mobile terminal is directed to the north at a first angle and a southward position in which the upper part of the mobile terminal is directed to the south at a second angle, and the sensing the security position may include sensing one of a normal position in which the upper part of the mobile terminal is located upward, a lying position in which the front surface of the mobile terminal faces up, and the other of the northward position in which the upper part of the mobile terminal is directed to the north at the first angle and the southward position in which the upper part of the mobile terminal is directed to the south at the second angle.

The transmitting may include transmitting display mode determination information further comprising at least one of a user authentication code, a user name, and a security level that is granted to a user of the mobile terminal, to the display apparatus.

An aspect of another exemplary embodiment may be achieved by providing a display apparatus having a personalization function including an image processor to process an image signal a display configured to display an image thereon based on the image signal a communicator configured to communicate with a mobile terminal a user input to receive a user's command to control the display apparatus and a controller to receive display mode instruction information comprising a display mode of the display from the mobile terminal through the communicator, and control the display mode of the display according to the display mode of the received display mode instruction information.

The controller may include the received display mode with a current display mode of the display, and when the received display mode is different from the current display mode, changes the current display mode to the received display mode.

The received display mode and current display mode may include one of a general mode in which the display displays a content that is shareable with a third party, and a security mode in which the display displays a content that is non-shareable with the third party, respectively.

When it is determined that the current display mode is changed from the security mode to the general mode, the controller promptly may change a current display screen to one of a black screen, a normal broadcasting channel screen, a normal VOD content screen and a normal Internet screen.

The user input may include a remote controller to wirelessly communicate with the communicator, and the remote controller comprises an NFC reader to transmit a user profile of the mobile terminal stored in an NFC tag of the mobile terminal to the display apparatus to authenticate the user profile by the display apparatus when the mobile terminal is tagged.

The foregoing and/or other aspects features and utilities of the present general inventive concept may also be achieved by providing a security mode controlling method of a display apparatus having a personalization function including receiving display mode instruction information comprising a desired display mode of the display apparatus from a mobile terminal, and controlling a current display mode of the display apparatus according to the desired display mode of the received display mode instruction information.

The controlling may include comparing the display mode of the received desired display mode instruction information with the current display mode of the display apparatus and changing the current display mode to the received desired display mode when the received desired display mode is different from the current display mode based on the comparison result.

The received desired display mode and the current display mode may include one of a general mode in which the display apparatus displays a content that is shareable with a third party, and a security mode in which the display apparatus displays a content that is non-shareable with the third party, respectively.

The controlling may further include promptly changing a current display screen to one of a black screen, a normal broadcasting channel screen, a normal VOD content screen and a normal Internet screen when the current display mode is changed from the security mode to the general mode.

The foregoing and/or other aspects features and utilities of the present general inventive concept may also be achieved by providing a display apparatus having a personalization function including an image processor to process an image signal a display configured to display an image thereon based on the image signal, a communicator to communicate with a mobile terminal, a user input to receive a user's command to control the display apparatus, and a controller to receive display mode determination information comprising a position of the mobile terminal from the mobile terminal through the communicator, determine a display mode of the display based on the position of the mobile terminal of the received display mode determination information, and control the display mode of the display according to the determined display mode.

The position of the mobile terminal may include a general position that allows the user to instruct the display apparatus to display a content that is shareable with a third party, and a security position that allows the user to instruct the display apparatus to display a content that is non-shareable with the third party.

The general position may include one of a bottom-up position in which a bottom of the mobile terminal is located upward, a turned-over position in which a front surface of the mobile terminal faces down, and one of a northward position in which an upper part of the mobile terminal is directed to the north at a first angle and a southward position in which the upper part of the mobile terminal is directed to the south at a second angle, and the security position may include one of a normal position in which the upper part of the mobile terminal is located upward, a lying position in which the front surface of the mobile terminal faces up, and the other of a northward position in which an upper part of the mobile terminal is directed to the north at the first angle and the southward position in which the upper part of the mobile terminal is directed to the south at the second angle.

The display mode of the display may include a general mode in which the display displays a content that is shareable with the third party, and a security mode in which the display displays a content that is non-shareable with the third party.

The controller may determine that the display mode of the display is the general mode when the position of the mobile terminal is the general position.

In the general mode, a first content that is shareable with the third party may be displayed.

The first content may include at least one a normal broadcasting channel and a normal VOD content.

The controller may determine that the display mode of the display is the security mode when the position of the mobile terminal is the security position.

The display mode determination information may include at least one of a user authentication code, a user name, a security flag which identifies whether the determined display mode is a security mode or a general mode, and a security level that is granted to a user of the mobile terminal.

The controller may determine in more detail that the security mode is a first security mode in which the display displays a second content that is non-shareable with the third party, and a second security mode in which the display displays a third content that is non-shareable with the third party, according to the user's security level.

The controller may determine that the security mode is a first security mode when the user's security level is a second security level, and determines that the security mode is a second security mode when the user's security level is a third security level.

The second security level may include a level that is granted to a minor who accesses the display apparatus in the security position, and the third security level may include a level that is granted to an adult who accesses the display apparatus in the security position.

The second content may include at least one personal schedule information and a personalized screen, and the third content comprises at least one of a content inaccessible to minors and a personal information protection content.

The controller may include the determined display mode with a current display mode of the display, and when the determined display mode is different from the current display mode based on a comparison result, change the current display mode to the determined display mode.

The controller may promptly change a current display screen to one of a black screen, a normal broadcasting channel screen, a normal VOD content screen and a normal Internet screen when the current display mode is changed from the security mode to the general mode.

The user input may include a remote controller which wirelessly communicates with the communicator, and the remote controller comprises an NFC reader to transmit a user profile of the mobile terminal stored in an NFC tag of the mobile terminal to the display apparatus to authenticate the user profile by the display apparatus when the mobile terminal is tagged.

The foregoing and/or other aspects features and utilities of the present general inventive concept may also be achieved by providing a security mode controlling method of a display apparatus having a personalization function including receiving display mode determination information comprising a position of a mobile terminal from the mobile terminal, determining a display mode of the display apparatus based on the position of the mobile terminal of the received display mode determination information, and controlling a display mode of the display apparatus according to the determined display mode.

The position of the mobile terminal may include a general position that allows the user to instruct the display apparatus to display a content that is shareable with a third party, or a security position that allows the user to instruct the display apparatus to display a content that is non-shareable with the third party.

The display mode of the display apparatus may include a general mode in which the display apparatus displays a content that is shareable with the third party, and a security mode in which the display apparatus displays a content that is non-shareable with the third party.

The determining may include determining that the display mode of the display apparatus is the general mode when the position of the mobile terminal is a general position.

The determining may include determining that the display mode of the display apparatus is the security mode when the position of the mobile terminal is the security position.

The display mode determination information may include at least one of a user authentication code, a user name, a security flag which identifies whether the determined display mode is a security mode or a general mode and a security level that is granted to a user of the mobile terminal.

The determining may include determining in detail that the security mode is a first security mode and a second security mode, according to the user's security level.

The determining in detail may include determining that the security mode is the first security mode in which the display apparatus displays a second content that is non-shareable with the third party when the user's security level is a second security level, and determining that security mode is the second security mode in which the display apparatus displays a third content that is non-shareable with the third party when the user's security level is a third security level.

The controlling may include comparing the determined display mode with a current display mode of the display apparatus, and changing the current display mode to the determined display mode when the determined display mode is different from the current display mode based on a comparison result.

The controlling may further include promptly changing a current display screen to one of a black screen, a normal broadcasting channel screen, a normal VOD content screen and a normal Internet screen when the current display mode is changed from the security mode to the general mode.

The foregoing and/or other aspects features and utilities of the present general inventive concept may also be achieved by providing a system to control personalization of display, comprising a display apparatus to receive a display mode instruction having a display mode and display a content according to the display mode instruction, and a mobile terminal to generate the display mode instruction having the display mode according to a position of the mobile terminal with respect to the display apparatus, such that the display mode of the display mode instruction changes in response to a change of the position of the mobile terminal such that the displayed content is changed in response to the changed display mode.

The position of the mobile terminal may be one of a general position and a security position corresponding to a general mode and a security mode of the display mode.

The content may be one of a first, a second, and a third contents corresponding to a first, a second, and a third security levels, respectively, such that the first content is displayed in the general mode and the second and the third contents are displayed in the security mode.

The display mode instruction may further include user authentication information of a user.

The user authentication information may link the user to one of the first, second, and third security levels to define the user's access to the displayed content.

When the user is linked with a lower security level of the first, the second, and the third security levels, the user may be prohibited from accessing the content of a higher security level of the first, the second, and the third security levels.

The user authentication information may include the user's profile stored in a near field communicator (NFC) in a cradle to which the mobile terminal is tagged, and the user's profile is transmitted to and read by the display apparatus.

The mobile terminal may include a communicator to communicate with the display apparatus, a sensor to sense the position of the mobile terminal, and a controller to determine the display mode according to the sensed position and transmit the display mode instruction having the display mode to the display apparatus through the communicator.

When the position of the mobile terminal is determined by the sensor, a message may be displayed by the display apparatus indicating a status of the display mode according to the determined position.

These and/or other features and utilities of the present general inventive concept will become apparent and more readily appreciated from the following description of the embodiments, taken in conjunction with the accompanying drawings of which:
FIG. 1 is a block diagram of a system that employs a mobile terminal and a display apparatus according to exemplary embodiments of the present general inventive concept;
FIG. 2 is a block diagram of the mobile terminal according to an exemplary embodiment of the present general inventive concept;
FIGS. 3A and 3B illustrate positions of the mobile terminal according to exemplary embodiments of the present general inventive concept;
FIGS. 4A and 4B illustrate positions of the mobile terminal according to exemplary embodiments of the present general inventive concept;
FIG. 5A and 5B illustrate positions of the mobile terminal according to exemplary embodiments of the present general inventive concept;
FIG. 6 is a flowchart illustrating control operations of the mobile terminal according to an exemplary embodiment of the present general inventive concept;
FIG. 7 illustrates a display screen of a display of the display apparatus when a user logs into the mobile terminal in a general position according to an exemplary embodiment of the present general inventive concept;
FIG. 8 is a block diagram of a display apparatus according to an exemplary embodiment of the present general inventive concept;
FIGS. 9A, 9B, and 9C illustrate display screens of the display of the display apparatus when a user logs into the display apparatus in a security position, when the security position is changed to a general position, and when the general position is changed to the security position, respectively;
FIG. 10 is a flowchart illustrating security mode control operations of the display apparatus in FIG. 8;
FIG. 11 is a block diagram of a mobile terminal according to an exemplary embodiment of the present general inventive concept;
FIG. 12 is a flowchart illustrating operations of the mobile terminal in FIG. 11;
FIG. 13 is a block diagram of a display apparatus according to an exemplary embodiment of the present general inventive concept; and
FIG. 14 is a flowchart illustrating security mode control operations of the display apparatus in FIG. 14.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

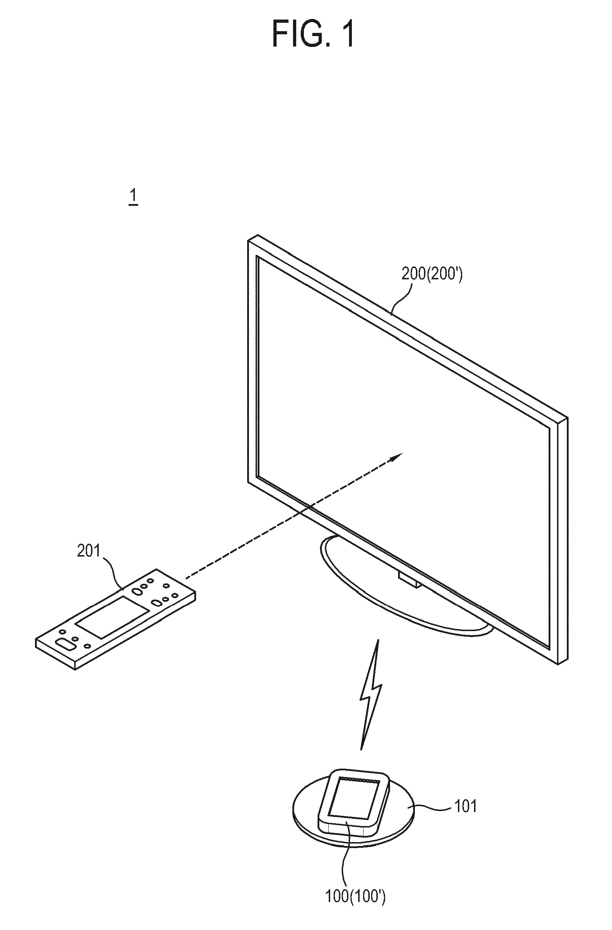

FIG. 1 is a block diagram of a system 1 where a personalization service is provided to a mobile terminal 100 (100') and a display apparatus 200 (200') according to exemplary embodiments of the present general inventive concept.

The mobile terminal 100 and the display apparatus 200 may be connected to each other in a wired manner through universal serial bus (USB) or Mobile High-definition Link (MHL), or wirelessly through Near Field Communication (NFC), Wireless Fidelity (Wi-Fi), Bluetooth, Infrared Data Association (IrDA), Zigbee, wireless LAN, or Ultra-Wideband (UWB), but are not limited thereto. The above description also applies to the mobile terminal 100' and the display apparatus 200'.

### [Embodiment 1]

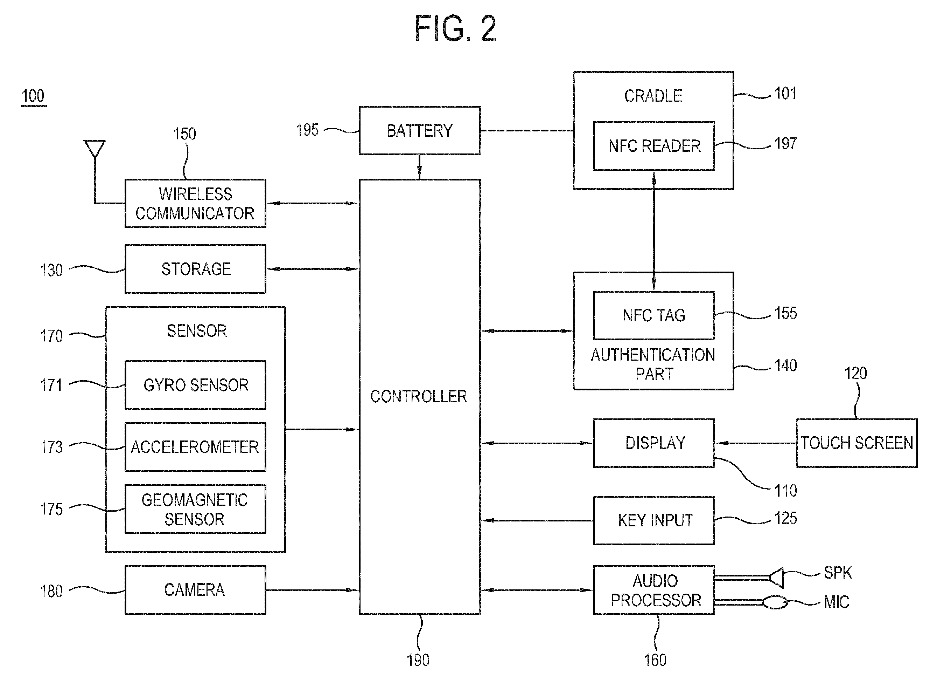

FIG. 2 is a block diagram of a mobile terminal 100 according to an exemplary embodiment of the present general inventive concept.

The mobile terminal 100 may perform communication to remotely control an external display apparatus such as a smart TV or an IPTV, and may include any apparatus such as a smart phone or a tablet PC that has an accelerometer, a gyro sensor and/or a geomagnetic sensor. Hereinafter, the mobile terminal 100 will be assumed to be a smart phone.

Referring to FIG. 2, the mobile terminal 100 includes a display 110, a touch screen 120, a key input 125, a storage 130, an authentication part 140, a wireless communicator 150, an audio processor 160, a sensor 170, a camera 180 and a controller 190.

During operations of the mobile terminal 100, the display 110 converts image data including videos and still images, a limited number of characters, and status information that are input by the controller 190, into analog signals and displays the converted analog signals. That is, the display 110 may provide various screens according to usage of the mobile terminal 100 such as a lock screen, a home screen, an application execution screen, a menu screen, a message preparation screen, a telephone call screen, an Internet screen and a keypad screen. The display 110 may be implemented as a liquid crystal display (LCD) panel, an organic light emitting diode (OLED) and an active matrix organic light emitting diode (AMOLED).

The touch screen 120 is mounted in a front surface of the display 110, and generates a touch event including an input signal to remotely control the display apparatus 200 in response to a user's manipulation of the touch screen 120, and transmits the touch event to the controller 190. In response to the touch event, the controller 190 may control the display apparatus 200 or set a usage authority of the mobile terminal 100 and control elements of the mobile terminal 100. The touch screen 120 may be implemented as a resistive type, a capacitive type or a pressure type.

The key input 125 generates a key signal related to controlling functions of the mobile terminal 100 and transmits the key signal to the controller 190. The key signal may be classified into power on/off signal, volume adjustment signal and screen on/off signal. To do the foregoing, side keys are formed in a lateral side or a lower front side of a case of the mobile terminal 100 to turn on/off the mobile terminal 100, to adjust volume and to turn on/off screens. The controller 190 controls elements in response to the key signal.

The storage 130 may store therein programs to perform processes and controls by the controller 190, and setting information of the mobile terminal 100.

The storage 130 further stores therein a user's authentication information used to allow the user of the mobile terminal 100 to access the display apparatus 200, that is input through an authentication information setting menu (not illustrated) executed by an ASIC part of the authentication part 140 to be described later. The user's authentication information may include personal information such as a user name, a user authentication code set by the user like an ID and password, and a user's image, voice, touch gesture, and motion gesture.

The storage 130 stores the status information collected by the controller 190 and personalization data extracted from the status information. The status information includes a usage history of application programs, search words for web browsing, a broadcasting viewing history, and a content usage history, and is used to forecast a user's interesting content. The personalization data are transmitted by the controller 190 to the display apparatus 200, and are used to search and extract a list of a user's interesting content (e.g. VOD or broadcasting channel) by using the Internet by the display apparatus 200, and to display the extracted list upon request from a user.

The storage 130 may be implemented as a storage medium including at least one of a flash memory, a hard disk, a multimedia card micro, a card-type memory (e.g. SD or XD memory), a random access memory (RAM), a static random access memory (SRAM), a read only memory (ROM), an electrically erasable programmable read-only memory (EEPROM), a programmable read-only memory (PROM), a magnetic memory, a magnetic disk and an optical disk.

The authentication part 140 authenticates a user profile of the mobile terminal 100 with respect to the display apparatus 300 to connect the mobile terminal 100 to the display apparatus 200 in a wired manner through USB, MHL or the like, or to wirelessly connect the mobile terminal 100 to the display apparatus 200 through Wi-Fi, Bluetooth or the like, and authenticates a user's authentication information to allow a user of the mobile terminal 100 to use the display apparatus 200.

The authentication part 140 may be implemented as an NFC tag 155 to store user information including a user profile of the mobile terminal 100, an NFC reader 197 to transmit the user information of the NFC tag 155 to the display apparatus 200 to authenticate the user profile by the display apparatus 200, and an application specific integrated circuit (ASIC) part, which is designed to accommodate therein an authentication program, to authenticate a user by using a user's authentication information.

The NFC tag 155 is attached to the mobile terminal 100 so that a user profile stored in the mobile terminal 100 is read by the NFC reader 197 when the mobile terminal 100 is tagged to the NFC reader 197.

The NFC reader 197 is installed in a cradle 101, which is used to wirelessly charge a battery 195 of the mobile terminal 100. The NFC reader 197 reads a user profile of the NFC tag 155 in tagging of the mobile terminal 100 and wirelessly transmits the user profile to the display apparatus 200. The display apparatus 200 compares the received user profile with a user profile of the mobile terminal 100 that is stored in advance therein, and, when the two user profiles are identical, authenticates a usage of a wired connection of the mobile terminal 100 to the display apparatus 200 through USB, MHL or the like, and a wireless connection of the mobile terminal 100 to the display apparatus 200 through Wi-Fi, Bluetooth or the like.

Alternatively, the NFC reader 197 may be installed in a remote controller 201 of the display apparatus 200 that pairs with the display apparatus 200, which will be described later in connection with the display apparatus 200.

When the user profile is to be authenticated as above, the wireless communicator 150 may be connected to the display apparatus 200 in a wired manner through USB, MHL or the like, or wirelessly through Wi-Fi, Bluetooth or the like.

After the display apparatus 200 connects with the mobile terminal 100, the display apparatus 200 requests for authentication information to allow the user of the mobile terminal 100 to use the display apparatus 200 after the user profile is authenticated. The ASIC part may use the user's authentication information that is directly input or pre-stored in the storage 130.

The user's authentication information may include personal information such as a user name, a user authentication code like an ID and password set by the user, or the user's image, voice, touch gesture, and motion gesture. The user's authentication information may be directly input by using the touch screen 120, a camera module of the camera 180, a microphone or a motion sensor, or may be stored in advance and used, when the display apparatus 200 requests for the authentication information. The motion sensor may employ an accelerometer 173 of the sensor 170 to be described later.

Hereinafter, the user's authentication information will be assumed to include personal information such as a user authentication code including an ID and a password set by an authorized user and a user name.

For example, when the display apparatus 200 requests for authentication information of a user who currently uses the mobile terminal 100 after the user profile is authenticated, the user's authentication information is transmitted to the display apparatus 200 through the wireless communicator 150 in a wired or wireless manner. Here, the user's authentication information is displayed on the touch screen 120 and includes a user authentication code input by the user through an authentication information setting menu (not illustrated) executed by the ASIC part. The display apparatus 200 compares the received user authentication information with user authentication information that is pre-stored in the display apparatus 200, and when the two authentication information are identical, allows the user of the mobile terminal 100 to access the display apparatus 200, i.e., log into the personalization function thereof.

The wireless communicator 150 forms a communication channel with the outside, and transmits and receives wireless signals of data that are input and output through an antenna by a control of the controller 190. For example, to transmit a wireless signal of the data, the wireless communicator 150 performs channel coding, spreading, and RF processing with respect to the data to be transmitted and transmits the processed data. Further, to receive a wireless signal of the data, the wireless communicator 150 converts a received RF signal into a baseband signal and performs de-spreading and channel decoding with respect to the baseband signal to restore the data.

The wireless communicator 150 transmits to the display apparatus 200 a touch event including an input signal to remotely control the display apparatus 200 that is input through the touch screen 120, by a control of the controller 190.

The wireless communicator 150 may include a module for NFC, i.e., may include at least one of Wi-Fi, Bluetooth, IrDA, Zigbee, wireless LAN and UWB modules.

The audio processor 160 modulates an audio signal that is input by a microphone and converts the modulated audio signal into audio data, and demodulates audio data input by the wireless communicator 150 and audio data stored in the storage 130 into audio signals, and outputs the audio signals as audio through a speaker, by a control of the controller 190.

The sensor 170 senses a position of the mobile terminal 100 that is placed on the cradle 101 by a user in order to control a display mode of the display apparatus 200 to be a general mode or a security mode depending on the sensed position. Here, the general mode allows a third party to share a displayed content, and the security mode prohibits the third party from sharing the displayed content.

As will be described later in connection with Table 1 below, the shareable content is a first content including a normal broadcasting channel and normal VOD content, and the non-shareable content is a second content including personal schedule information and a personalized screen, contents inaccessible to minors, and personal information protection content, such as a payment screen.

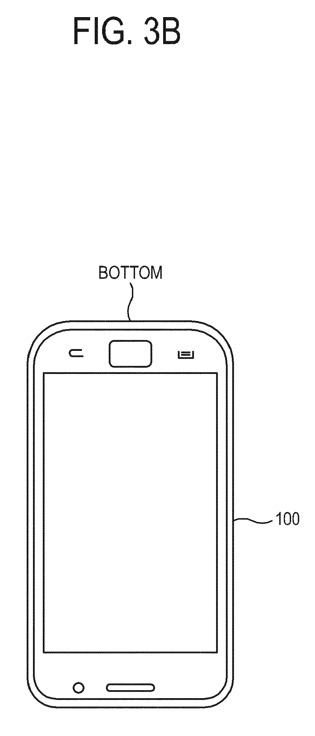

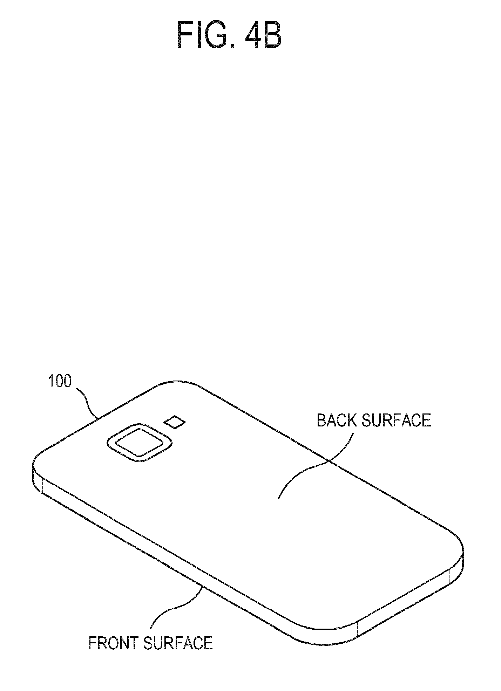

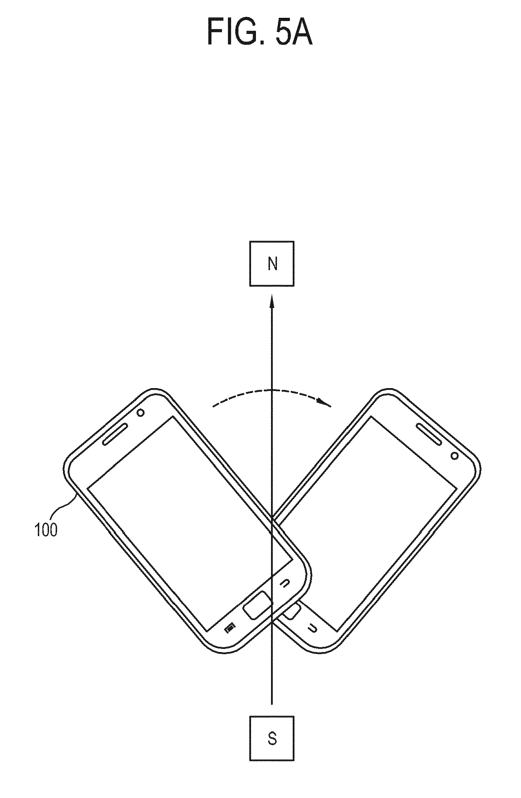

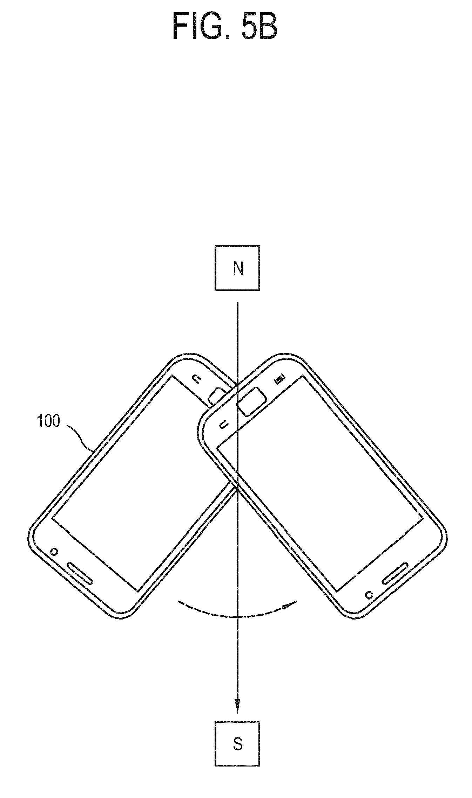

In case that the display apparatus 200 is controlled to be in the general mode, the user puts the mobile terminal 100 in a general position on the cradle 101. The general position may include a bottom-up position in which a bottom of the mobile terminal 100 is located upward (FIG. 3B), a turned-over position in which a front surface of the mobile terminal 100 faces down (FIG. 4B), or one of a northward position in which an upper part of the mobile terminal 100 is directed to the north at a certain angle (FIG. 5A) and a southward position in which the upper part of the mobile terminal 100 is directed to the south at a certain angle (FIG. 5B). In some other embodiments, the northward position may be replaced by a first compass position and the southward position may be replaced by a second compass position.

In case that the display apparatus 200 is controlled to be in the security mode, the user puts the mobile terminal 100 in a security position on the cradle 101.

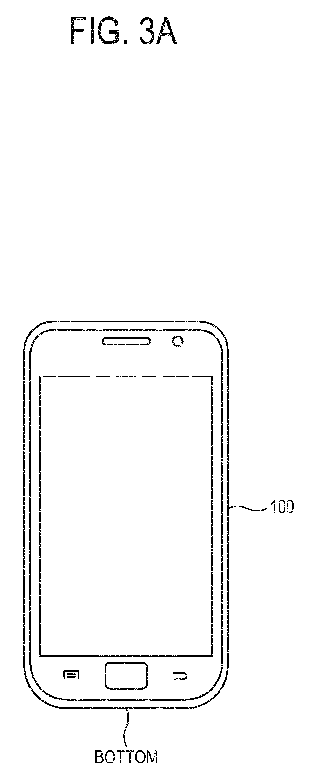

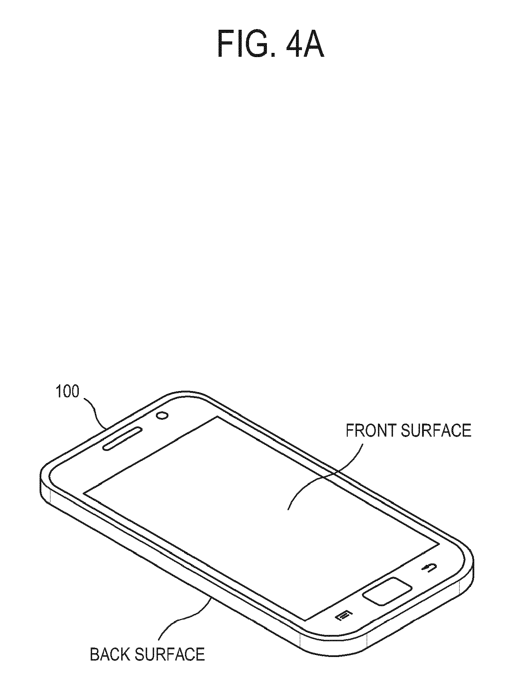

The security position may include a normal position in which the upper part of the mobile terminal 100 is located upward (FIG. 3A), a lying position in which the front surface of the mobile terminal 100 faces up (FIG. 4A), or the other of the northward position in which the upper part of the mobile terminal 100 is directed to the north at a certain angle (FIG. 5A) and the southward position in which the upper part of the mobile terminal 100 is directed to the south at a certain angle (FIG. 5B).

The general position and the security position of the mobile terminal 100 may be set to be known only to the user and are not limited to the positions explained above. For example, the general position and security position may be oppositely set to the positions explained above.

It has been explained above that the position of the mobile terminal 100 is changed by physically turning or relocating the mobile terminal 100 by the user. However, the position of the mobile terminal 100 may be also changed by a screen changing command that is input through an icon (not illustrated) displayed on the display 110 of the mobile terminal 100 to change an orientation of screen, such as a portrait or landscape orientation, according to a design.

Hereinafter, the position of the mobile terminal 100 is assumed to be changed by physically relocating the mobile terminal 100 by the user.

The position of the mobile terminal 100 is sensed by the sensor 170, which includes a gyro sensor 171, an accelerometer 173, and a geomagnetic sensor 175.

The gyro sensor 171 senses a rotational inertia when the user twists the mobile terminal 100 to the left and right for rotation. Based on a rotational inertial sensing signal that is output by the gyro sensor 171, the controller 190 determines whether the mobile terminal 100 is in the normal position (FIG. 3A) or in the bottom-up position (FIG. 3B). When it is determined that the mobile terminal 100 is in the normal position as illustrated in FIG. 3A, the controller 190 decides that a display mode of the display apparatus 200 instructed by the user is a security mode. When it is determined that the mobile terminal 100 is in the bottom-up position as illustrated in FIG. 3B, the controller 190 decides that the display mode of the display apparatus 100 instructed by the user is a general mode.

The accelerometer 173 senses a gravity direction when the user turns the mobile terminal 100 so that the front surface thereof faces up or down. Based on a gravity sensing signal that is output by the accelerometer 173, the controller 190 determines whether the mobile terminal 100 is in the lying position (FIG. 4A) or in the turned-over position (FIG. 4B). When it is determined that the mobile terminal 100 is in the lying position as illustrated in FIG. 4A, the controller 190 decides that the display mode of the display apparatus 100 instructed by the user is the security mode. When it is determined that the mobile terminal 100 is in the turned-over position as illustrated in FIG. 4B, the controller 190 decides that the display mode of the display apparatus 100 instructed by the user is the general mode.

The accelerometer 173 further senses a motion of the mobile terminal 100 when the user moves the mobile terminal 100. In this case, based on a motion sensing signal that is output by the accelerometer 173, the controller 190 displays an image while moving (scrolling) a picture. When the accelerometer 173 is used as a motion sensor of the authentication part 140, the controller 190 senses a motion gesture input to the mobile terminal 100 by the user, and transmits a corresponding signal to the authentication part 140 to authenticate the user of the mobile terminal 100 to use the display apparatus 200 by using the motion gesture at the display apparatus 200.

The geomagnetic sensor 175 senses an azimuth direction when the user twists the mobile terminal 100 to the left and right for rotation. Based on an azimuth sensing signal that is output by the geomagnetic sensor 175, the controller 190 determines whether the mobile terminal 100 is in the northward position (FIG. 5A) or in the southward position (FIG. 5B). When it is determined that the mobile terminal 100 is in the northward position as illustrated in FIG. 5A or the southward direction in FIG. 5B, the controller 190 decides that a display mode of the display apparatus 100 instructed by the user is the security mode. When it is determined that the mobile terminal 100 is in the southward position as illustrated in FIG. 5B or the northward direction as illustrated in FIG. 5A, the controller 190 decides that the display mode of the display apparatus 100 instructed by the user is the general mode.

In addition to the gyro sensor 171, the accelerometer 173 and the geomagnetic sensor 175, the sensor 170 may further include additional sensors such as a tilt sensor, a direction displacement sensor which may sense a change in direction of the mobile terminal 100.

The camera 180 is used to convert an optical signal into a video signal, and may include a camera module. The camera module processes an image frame such as a still image or video that is obtained by an image sensor in a telephone call mode or a photographing mode. The processed image frame may be displayed on the display 110 by a control of the controller 190.

The camera module may be an element of the authentication part 140 to input a user's authentication information to allow the user to use the display apparatus 200. As such, when an input of a user's authentication image is selected from an authentication information setting menu of the ASIC that is displayed on the touch screen 120, the controller 190 drives the camera module, photographs an input image through the camera module and stores the photographed image in the storage 130.

The controller 190 is a central processing device of the mobile terminal 100, and controls interpretation of commands, computation and calculation of data, and a series of processes of receiving data from various input devices, processing the data and transmitting a processing result to an output device.

For example, the controller 190 loads from the storage 130 menu organization information including an operating system (OS) and various applications used by the mobile terminal 100 and executes the OS and the applications. The controller 190 may process and control voice calls and data communications through the wireless communicator 150, and control power supply from the battery 195 to internal elements.

The controller 190 may integrally include a control part to control overall operations of the mobile terminal 100 and signal flows between elements of the mobile terminal 100, a processor to process data, and a peripheral device interface to control input/output between the control part, the processor, and the peripheral devices, including the display 110, touch screen 120, key input 125, authentication part 140, wireless communicator 150, audio processor 160, sensor 170, and camera 180,.

When the display apparatus 200 requests the controller 190 to input the user's authentication information through the wireless communicator 150 after the mobile terminal 100 is tagged to the NFC reader 197 and the user profile of the NFC tag 166 is authenticated, the controller 190 transmits the user's authentication information, including the user authentication code input through the touch screen 120, to the display apparatus 200 through the wireless communicator 150. As explained above, the display apparatus 200 authenticates the received user's authentication information and allows the user of the mobile terminal 100 to access the display apparatus 200 so as to use the personalization function.

To use the personalization function of the display apparatus 200, the controller 190 collects at a predetermined interval status information regarding a usage history of applications, search words for web browsing, broadcasting viewing history, and a content usage history, extracts personalization data from the collected status information and updates the personalization data to the storage 130, and concurrently transmits the personalization data to the display apparatus 200 through the wireless communicator 150. The display apparatus 200 searches and extracts a list of a user's interesting content, such as a VOD or a broadcasting channel, from the collected personalization data through the Internet, and displays the extracted list upon request from the user.

Based on position information of the mobile terminal 100 that is transmitted by the sensor 170, the controller 190 determines a display mode of the display apparatus 200 that is instructed by the user.

More specifically, when the position information of the mobile terminal 100 is a general position including the bottom-up position (FIG. 3B), the turned-over position (FIG. 4B), or one of the northward position (FIG. 5A) and the southward position (FIG. 5B), the controller 190 determines that the display mode is a general mode in which the display apparatus 200 displays a content that is shareable with a third party.

The general mode may display only the first content that is shareable with the third party. The first content may be viewed and accessed by a user of a first security level who has accessed the display apparatus 200 through user authentication in the general position, and may include a normal broadcasting channel and normal VOD content as illustrated in Table 1 below.

When the position information of the mobile terminal 100 is a security position including the normal position (FIG. 3A), the lying position (FIG. 4A), or the other of the northward position (FIG. 5A) and the southward position (FIG. 5B), the controller 190 determines that the display mode is a security mode in which the display apparatus 200 displays a content that is non-shareable with the third party.

The controller 190 may further take into account a user's security level and thus determine the security mode in more detail. That is, when the user's security level is a second security level that is granted to a minor who accesses the display apparatus 200 through user authentication and in the security position, the controller 190 determines that the security mode is a first security mode in which the display apparatus 200 displays a second content that is non-shareable with the third party. When the user's security level is a third security level that is granted to an adult who accesses the display apparatus 200 through user authentication and in the security position, the controller 190 determines that the security mode is a second security mode in which the display apparatus 200 displays a third content that is non-shareable with the third party.

As illustrated in Table 1 below, the second content may include personal schedule information and a personalized screen, and the third content may include a content inaccessible to minors and a personal information protection content such as a payment screen.

**[Table 1]**

| Example of contents that are displayed by display mode of personalization function/security level | | | | |
|---|---|---|---|---|
| Mode | | Security Level | Content | Description |
| Security Mode | Second Security Mode | Third Security Level | Third Content | Content inaccessible to minors, Personal information protection content (payment screen, etc.) |
| | First Security Mode | Second Security Level | Second Content | Personal schedule, personalization screen |
| General mode | | First Security Level | First Content | Normal broadcasting channel, normal VOD |

After the display mode is determined as above, the controller 190 transmits display mode instruction information including the determined display mode to the display apparatus 200 through the wireless communicator 150 in a wired or wireless manner.

The display mode instruction information is transmitted as a transmission packet including a user authentication code, a user name, a security level, and security flag as illustrated in Table 2 below.

**[Table 2]**

| Example of transmission packet of display mode instruction information | | | | | |
|---|---|---|---|---|---|
| Header | User Authentication Code | User Name | Security Level | Security Flag (bit) | Tail |
| | Admin/ | Dad/ | 3 | 1 | |
| | General/ | Mom/ | 1 | 0 | |
| | General/ | Son/ | 2 | 1 | |
| | . | . | . | . | |
| | . | . | . | . | |

The security flag is displayed as a bit, specifically, as 1 in a security mode and as 0 in a general mode to identify whether the determined display mode is the security mode or general mode.

The display mode of the display apparatus 200 is controlled to be the security mode or the general mode depending on the position of the mobile terminal 100 that is sensed by the sensor 170 of the mobile terminal 100, and thus the content displayed by the display apparatus 200 may be promptly changed by a simple motion of changing the position of the mobile terminal 100.

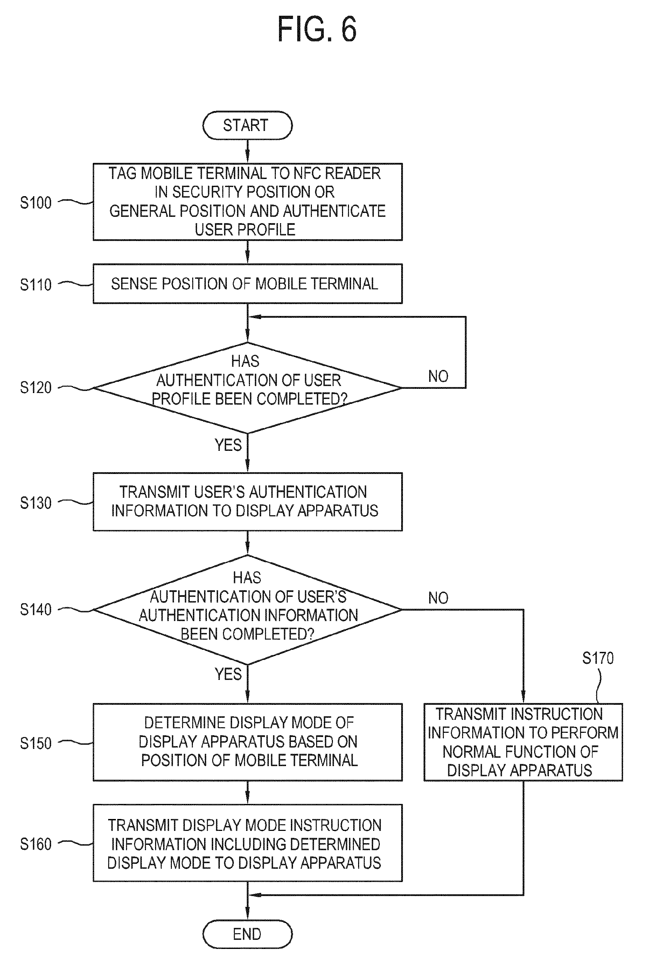

FIG. 6 is a flowchart illustrating control operations of the mobile terminal 100 according to an exemplary embodiment of the present general inventive concept.

It is assumed that the control operations of the mobile terminal 100 are performed by tagging the mobile terminal 100 by a dad as an adult in the turned-over position of the general position and logging into the general mode of the personalization function after user authentication.

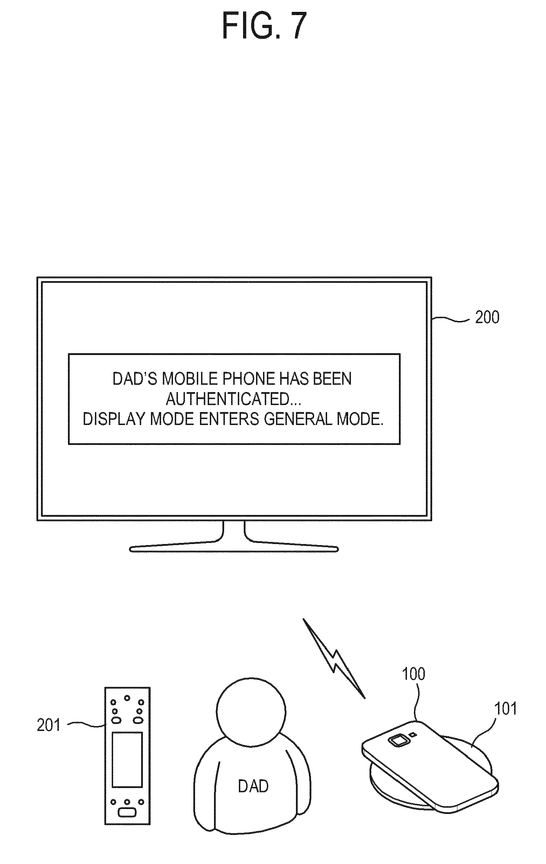

A user puts the mobile terminal 100 in the security position or general position, e.g., in the turned-over position of the general position as illustrated in FIGS. 4B and 7 to tag the NFC tag 155 of the mobile terminal 100 to the NFC reader 197 of the cradle 101 (S100). As a result, the NFC reader 197 reads the user profile of the NFC tag 155 and transmits the user profile to the display apparatus 200, and the display apparatus 200 authenticates the received user profile.

At the same time, the sensor 170 senses the position of the mobile terminal 100 as the turned-over position of the general position through the accelerometer 173, and outputs a corresponding sensing signal to the controller 190 (S110).

Then, the controller 190 determines whether the authentication of the user profile has been completed, based on a reception of an authentication completion signal for the user profile from the display apparatus 200 (S120).

When it is determined at operation S120 that the authentication of the user profile of the mobile terminal 100 has been completed (S120-Y), the controller 190 controls the ASIC part of the authentication part 140 to display the authentication information setting menu on the display 110, and transmits the user's authentication information, which is input through the authentication information setting menu, to the display apparatus 200 through the wireless communicator 150 (S130). As a result, the display apparatus 200 authenticates the user's authentication information.

The controller 190 determines whether the authentication of the user's authentication information has been completed, based on a reception of an authentication completion signal for the user's authentication information from the display apparatus 200 (S140).

When it is determined at operation S140 that the authentication of the user's authentication information of the mobile terminal 100 has been completed (S140-Y), the controller 190 determines that the position of the mobile terminal 100 is the turned-over position of the general position according to the sensing signal of the sensor 170, and determines that the display mode of the display apparatus 200 that is input by the user is the general mode (S150).

The controller 190 transmits the display mode instruction information including the determined general mode to the display apparatus 200 through the wireless communicator 150 (S160). The controller 190 may transmit the display mode instruction information including the user authentication code, the user name ('dad'), the user's security level ('1') indicating the first security level at which the user accesses in the general mode through the user authentication, and the security flag ('0') indicating that the determined display mode is the general mode.

When it is determined at operation S140 that the authentication of the user's authentication information of the mobile terminal 100 has been failed (S140-N), the controller 190 transmits instruction information to perform a normal function of the display apparatus 200 such as sharing contents including photos and videos rather than the personalization function according to a user's input that is made through the touch screen 120 (S170).

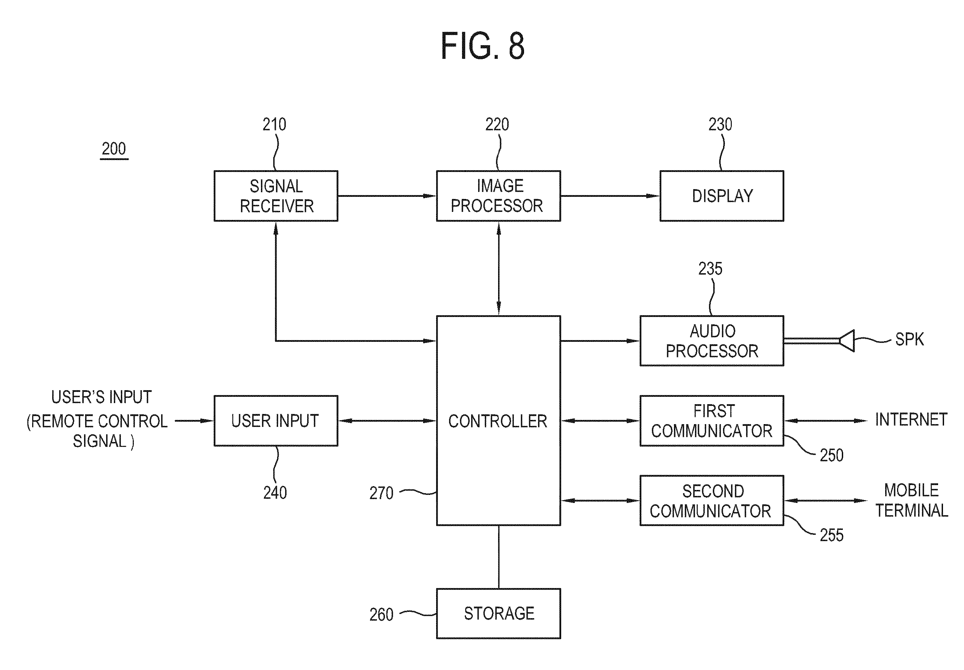

FIG. 8 is a block diagram of a display apparatus 200 according to an exemplary embodiment of the present general inventive concept.

The display apparatus 200 provides a personalization function to personalize and manage respective functions of the display apparatus 200 for each user, and includes an image displaying apparatus such as a smart TV and IPTV. Hereinafter, a smart TV will be described as an example of the display apparatus 200.

Referring to FIG. 8, the display apparatus 200 includes a signal receiver 210, an image processor 220, a display 230, an audio processor 235, a user input 240, a communicator 250, a storage 260, and a controller 270.

The signal receiver 210 may receive an image signal included in a broadcasting signal that is transmitted by a broadcasting signal transmission device (not illustrated), receive an image signal from an imaging device such as a DVD player or a BD player, receive an image signal from a personal computer (PC), receive an image signal through a network such as the Internet, or receive an image content as an image signal that is stored in a storage medium such as a USB storage medium.

The image processor 230 may process an image signal that is received by the signal receiver 210 to display an image. The image processor 230 may perform decoding, image enhancement, scaling, and other related functions.

The display 230 displays an image thereon based on an image signal that is processed by the image processor 220. There is no limitation in displaying an image by the display 230, and the display 230 includes an LCD, PDP or OLED panel, but is not limited thereto.

The audio processor 235 processes an audio signal from a broadcasting signal that is received by the signal receiver 210 and outputs the processed audio signal to the speaker by a control of the controller 260.

The user input 240 receives a user's input. The user input 240 may include a remote controller 201 to receive the user's input and a remote control signal receiver to receive a remote control signal including key input information corresponding to the user's input.

In case that the NFC reader 197 is not installed in the cradle 101 of the mobile terminal 100 as referred to above, an NFC reader (not illustrated) may be installed in the remote controller 201. In such case, operations of the NFC reader installed in the remote controller 201 are the same as the operations of the NFC reader 197 installed in the cradle 101 except that the remote controller 201 can be unlocked by authenticating a user profile and user authentication information, if the remote controller 201 is locked.

The first communicator 250 communicates with an external service providing server through the Internet. The first communicator 250 exchanges information regarding a user's input and analysis result of the input with the service providing server, by a control of the controller 270.

The second communicator 255 communicates with the mobile terminal 100 through the wireless communicator 150/NFC reader 197 of the mobile terminal 100 in a wired or wireless manner.

The storage 260 stores therein contents, such as broadcasting channel or VOD, that are played by the display apparatus 200 and/or programs for controlling the display apparatus 200.

The storage 260 stores therein a user profile of the mobile terminal 100 that is allowed to be linked to the personalization function of the display apparatus 200, and authentication information of a user who is allowed to use the display apparatus 200. The user's authentication information includes personal information including a user name and a user authentication code that is set by the user. Alternatively, the user's authentication information may further include a user's image, voice, fingerprint, touch gesture, and motion gesture, as explained above in connection with the mobile terminal 100.

The storage 260 stores therein a list of a user's interesting content, such as a VOD or a broadcasting channel, that has been obtained by searching the content through the Internet based on personalization data provided by the mobile terminal 100.

The controller 270 controls overall functions of the display apparatus 200, and in particular, controls functions of the display apparatus 200 according to an input signal that is received from the user input 240 and the mobile terminal 100.

The controller 270 searches the user's interesting content including the VOD or the broadcasting channel through the Internet based on personalization data received from the mobile terminal 100, and controls the storage 260 to store therein the list of interesting contents that has been obtained through the Internet searching.

When the mobile terminal 100 is tagged to the cradle 101, the user profile of the NFC tag 155 is read by the NFC reader 197 and transmitted to the display apparatus 200 through the second communicator 255, where the controller 270 compares the received user profile of the mobile terminal 100 with a user profile stored in the storage 260. When the two profiles are identical, the mobile terminal 100 is connected to the display apparatus 200 in a wired manner through USB, MHL or the like or in a wireless manner through Wi-Fi, Bluetooth or the like.

When the wired or wireless communication is established, the display apparatus 200 requests the mobile terminal 100 to transmit the user's authentication information through the second communicator 255 to the display apparatus 200. Subsequently, the controller 270 compares the received user's authentication information with the user's authentication information stored in the storage 260, and allows the user of the mobile terminal 100 to access the display apparatus 200 by logging into the personalization function when the two authentication information are identical.

According to an exemplary embodiment of the present general inventive concept, when the controller 270 receives display mode instruction information including a display mode of the display 230 designated by the user through the second communicator 255 from the mobile terminal 100, the controller 270 controls the display mode of the display 230 according to the display mode of the received display mode instruction information.

More specifically, the controller 270 compares the display mode of the received display mode instruction information with a current display mode of the display 230, and when the received display mode is different from the current display mode, changes the current display mode to the received display mode.

When it is determined that the current display mode is changed from the security mode to the general mode, the controller 270 may promptly change a current display screen to one of a black screen, a normal broadcasting channel screen, a normal VOD content screen and an Internet browser screen. The changed display screen of the display 230 may display a message indicating that the display mode has been changed.

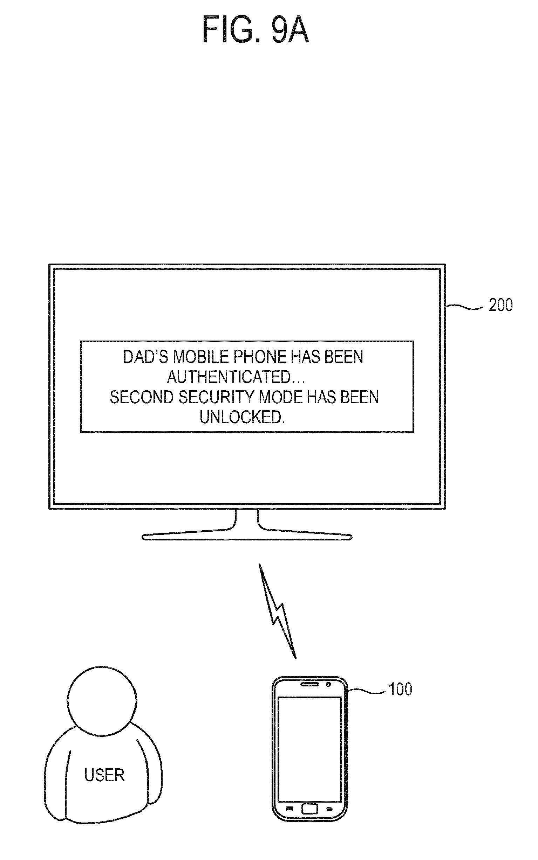

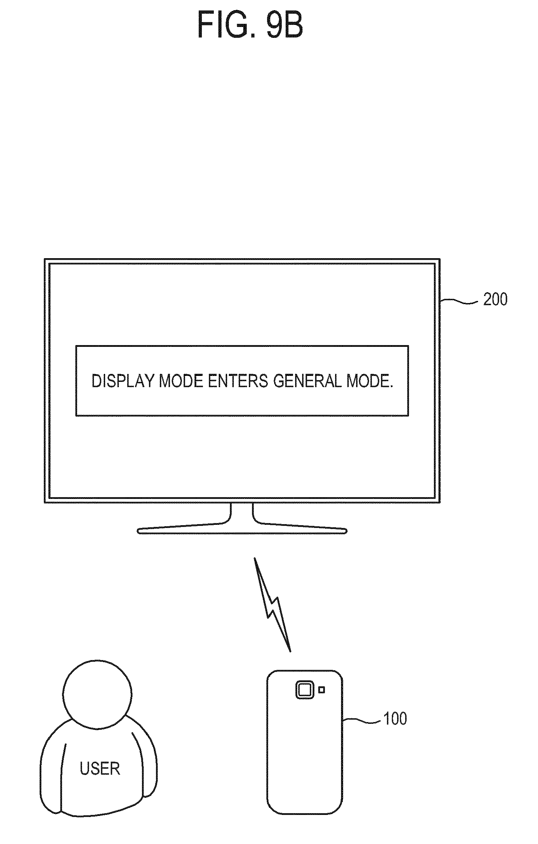

For example, referring to FIG. 9A, when a dad as an adult tags the mobile terminal 100 in the normal position (FIG. 3A) of the security position and logs into the second security mode after user authentication, a display screen of the display 230 displays a message "the mobile phone has been authenticated, and the second security mode has been unlocked." indicating that a user (i.e., dad) logs into the second security mode. As illustrated in FIG. 9B, when the position of the mobile terminal 100 is changed to the bottom-up position of the general position (FIG. 3B), the display screen of the display 230 is promptly changed to, for example, a black screen, and displays a message "the display mode enters the general mode." indicating that the display mode enters the general mode.

Accordingly, even if a third party suddenly enters a viewing area of the display apparatus 200 while the user is viewing or accessing a content that is non-shareable with the third party, for instance, the second content including personal schedule information and a personalized screen, or the third content including a content inaccessible to minors and personal information protection content (payment screen), in particular, the third content, the user may promptly change the current display screen to the normal screen, such as the black screen, the normal broadcasting channel screen, the normal VOD content screen or the normal Internet screen, by just changing the position of the mobile terminal 100 from an existing security position, i.e., from one of the normal position (FIG. 3A), the lying position (FIG. 4A) or one of the northward position (FIG. 5A) and the southward position (FIG. 5B), to one of the general positions including the bottom-up position (FIG. 3B), the turned-over position (FIG. 4B) or the other of the northward position (FIG. 5A) and the southward position (FIG. 5B), without a need to change the current screen to another screen by performing several manipulation steps to ensure the third party not being exposed to the corresponding content. As a result, a user's inconvenience that the user has felt to change the current screen to another screen through several manipulation steps not to expose the corresponding content to the third party may be cured.

When it is determined that the current display mode is changed from the general mode to the security mode, the controller 270 may change a current display screen to a security mode screen, which is displayed when the user initially logs into the display apparatus 200, without specific limitation. The changed display screen of the display 230 may display a message indicating that the display mode has been changed, like in the case where the security mode is changed to the general mode.

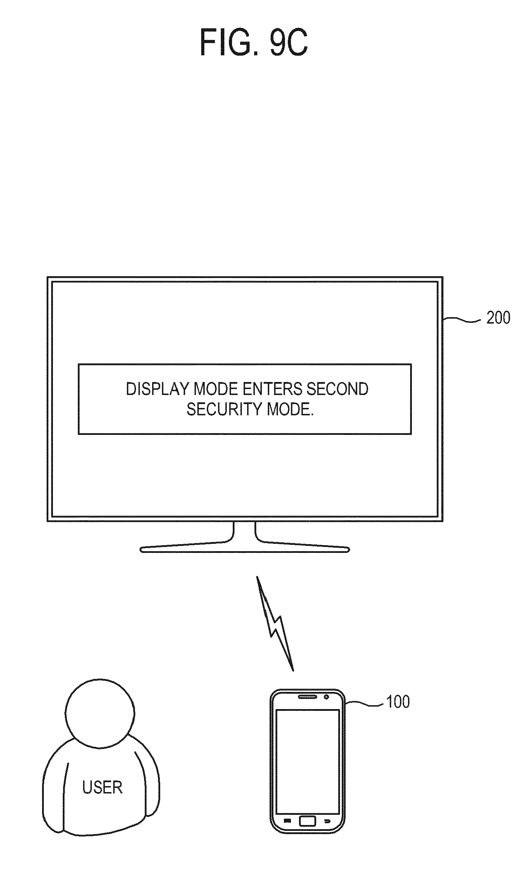

For example, when the position of the mobile terminal 100 in FIG. 9B is changed to the normal position (FIG. 3A) of the security position again, a display screen of the display 230 displays a message "the display mode enters the second security mode" indicating that the display mode enters the second security mode as illustrated in FIG. 9C.

The controller 270 includes a central processing unit (CPU), and may execute firmware or operating program (not illustrated) that is programmed to control operations of respective elements. The controller 270 may further include a non-volatile memory such as a flash memory to store the operating program therein, and a volatile memory such as a DDR to load at least a part of the stored operating program for the CPU to promptly access.

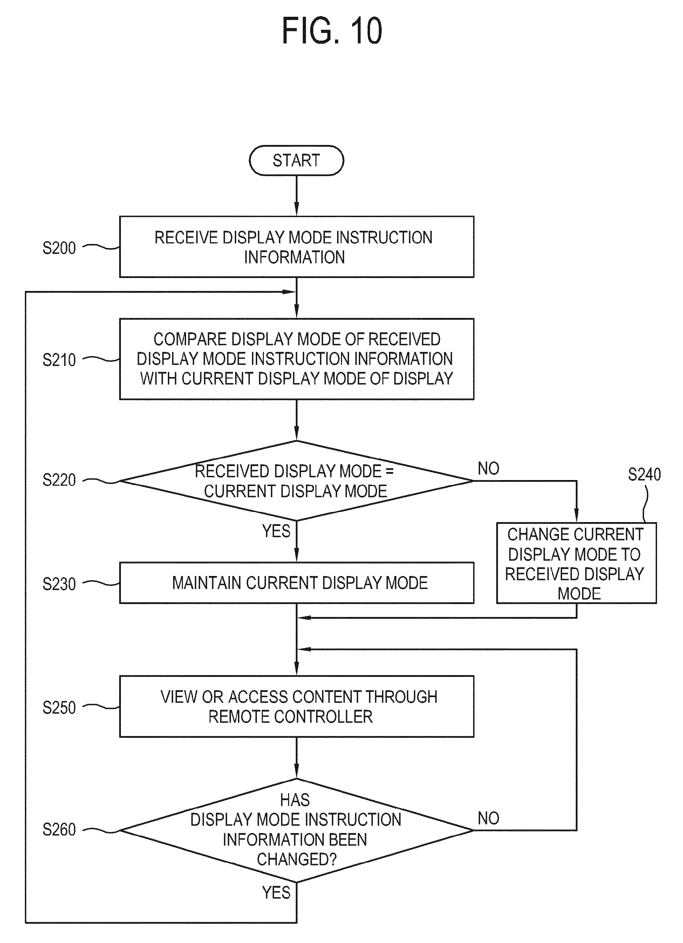

FIG. 10 is a flowchart illustrating security mode control operations of the display apparatus 200 according to an exemplary embodiment of the present general inventive concept.

The controller 270 receives the display mode instruction information including the display mode of the display 230 that is designated by a user, from the mobile terminal 100 through the second communicator 255 (S200). The display mode of the display mode instruction information is assumed to be the general mode that has been determined corresponding to the turned-over position of the general position, when the dad as an adult tags the mobile terminal 100 in the turned-over position of the general position as illustrated in FIGS. 7 and 4B.

The controller 270 compares the general mode as the display mode of the received display mode instruction information with the current display mode of the display 230 (S210). The current display mode is assumed to be a non-screen state when the display apparatus 200 is in an initial operation state.

When it is determined at operation S210 that the display modes are identical (S220-Y), the controller 270 maintains the current display mode (S230). When it is determined at operation S210 that the display modes are different (S220-N), the controller 270 changes the current display mode to the display mode of the received display mode instruction information (S240). Since the general mode as the display mode of the received display mode instruction information is different from the non-screen state as the current display mode, the controller 270 changes the non-screen state as the current display mode to the general mode. Then, the display screen of the display 230 displays a message "Dad's mobile phone has been authenticated, and the display mode enters the general mode" indicating that the display mode enters the general mode.

Then, the user may display on the display 230, and view or access, the normal broadcasting channel or normal VOD as the first content of the general mode by his/her input through the remote controller 201 (S250). The user may not view or access the second content or third content, which has a higher security mode than the first content of the general mode does.

When the user changes the position of the mobile terminal 100 to the security position corresponding to the security mode, e.g., to the lying position (FIG. 4A) to view or access the second content or third content of the security mode (S260), the controller 270 changes the current display mode of the display 230 to the security mode based on the display mode instruction information transmitted by the mobile terminal 100 like those at operations S210 through S240 explained above.

If a user's security level is the second security level that is granted to a minor who accesses in the security position, the controller 270 displays the current display mode as the second content corresponding to the first security mode. If the user's security level is the third security level that is granted to an adult who accesses in the security position, the controller 270 displays the third content corresponding to the second security mode. Since the dad as the user is an adult and corresponds to the third security level at which the dad accesses in the lying position (FIG. 4A) of the security position, the controller 270 displays the current display mode as the third content corresponding to the second security mode.

The user may not access a content in a higher mode than the current display mode, but may view or access a content in a lower mode than the current display mode according to his/her input through the remote controller 201.

When the current display mode is changed from the security mode to the general mode, the controller 270 promptly changes the current display screen to the black screen, the normal broadcasting channel screen, the VOD content screen or the normal Internet screen. This is because there is a high possibility that the user has desired to promptly change the display mode not to expose the content displayed in the security mode, e.g., the second content including the personal schedule information and personalized screen or the third content including the content inaccessible to minors and personal information protection content (payment screen) to the third party. Accordingly, even if the user of the present general inventive concept suddenly changes the security mode to the general mode, no problems would arise from unnatural ending of the content or exposure of the content to the third party, because performing several manipulation steps is no longer needed to end the content, and thereby would not make the user and the third party feel awkward or uncomfortable.

### [Embodiment 2]

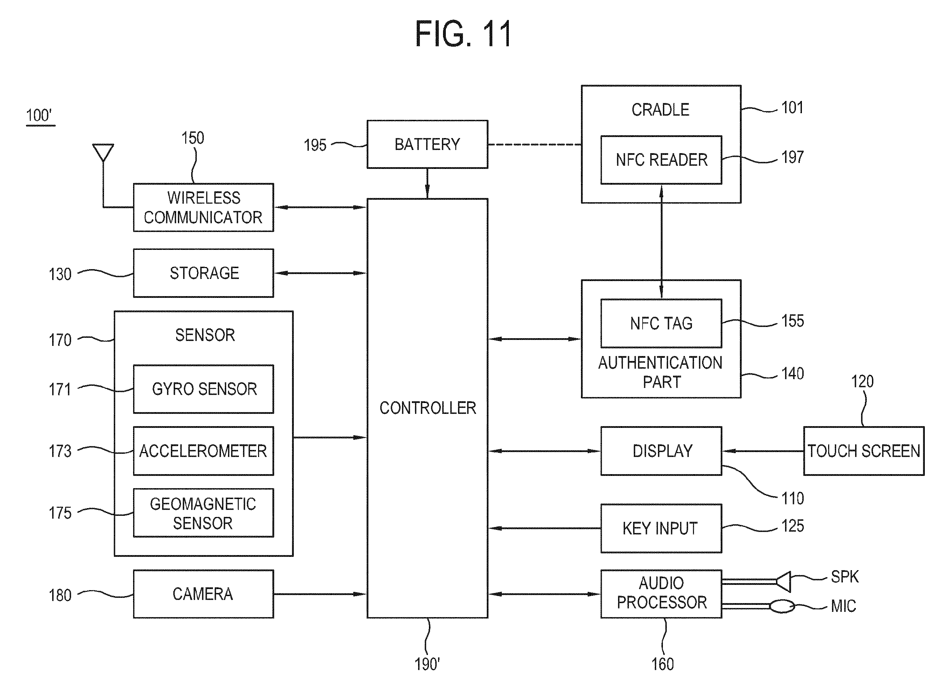

FIG. 11 is a block diagram of a mobile terminal 100' according to an exemplary embodiment of the present general inventive concept.

The mobile terminal 100' is the same as the mobile terminal 100 in FIG. 2 except that a controller 190' of the mobile terminal 100' transmits position information of the mobile terminal 100' sensed by a sensor 170 to a display apparatus 200' without analyzing the position information.

More specifically, the controller 190' does not determine a display mode of the display apparatus 200' input by a user based on a position of the mobile terminal 100 sensed by the sensor 170, unlike the controller 190 of the mobile terminal 100 in FIG. 2. That is, the controller 190' transmits display mode determination information including a position of the mobile terminal 100' sensed by the sensor 170 to the display apparatus 200' through a wireless communicator 150 in a wired or wireless manner, so that the display apparatus 200' determines the display mode of the display apparatus 200' instructed by the user based on the position of the mobile terminal 100' sensed by the sensor 170.

The display mode determination information is transmitted as a transmission packet in a data format including a user authentication code, a user name and position information of the mobile terminal 100' as illustrated in Table 3 below.

**[Table 3]**

| Example of transmission packet of display mode instruction information | | | | |
|---|---|---|---|---|
| Header | User Authentication Code | User Name | Position Information | Tail |
| | Admin/ | Dad/ | General position/Turned-over Position | |
| | General/ | Mom/ | Security Position/Lying Position | |
| | General/ | Son/ | Security Position/Lying Position | |
| | . | . | . | |
| | . | . | . | |

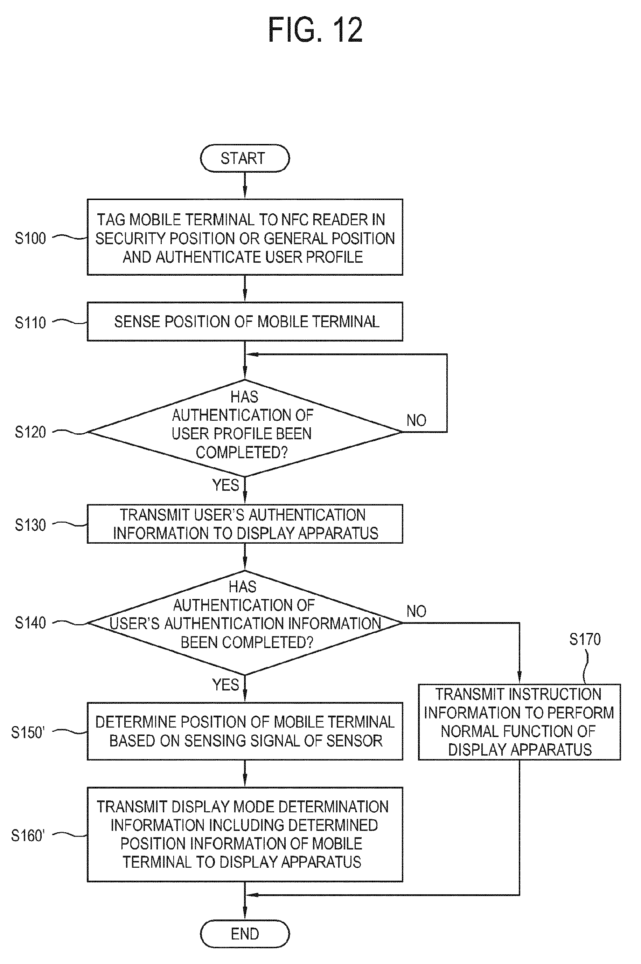

FIG. 12 is a flowchart illustrating operations of the mobile terminal 100' In FIG. 11.

The operations of the mobile terminal 100' are the same as the operations of the mobile terminal 100 in FIG. 6 except for operations S150' and S160'.

That is, at operation S150', the controller 190' determines a position of the mobile terminal 100' according to a sensing signal from the sensor 170, e.g., determines only the turned-over position of the general position as illustrated in FIGS. 4B and 7, and does not determine a display mode of the display apparatus 200 input by a user based on the determined position of the mobile terminal 100'.

At operation S160', the controller 190' transmits display mode determination information including the position information of the mobile terminal 100' determined at operation S150', to the display apparatus 200' through the wireless communicator 150 in a wired or wireless manner. As illustrated in Table 3 above, the display mode determination information is transmitted as a transmission packet in a data format including the user authentication code, user name and position information of the mobile terminal 100'.

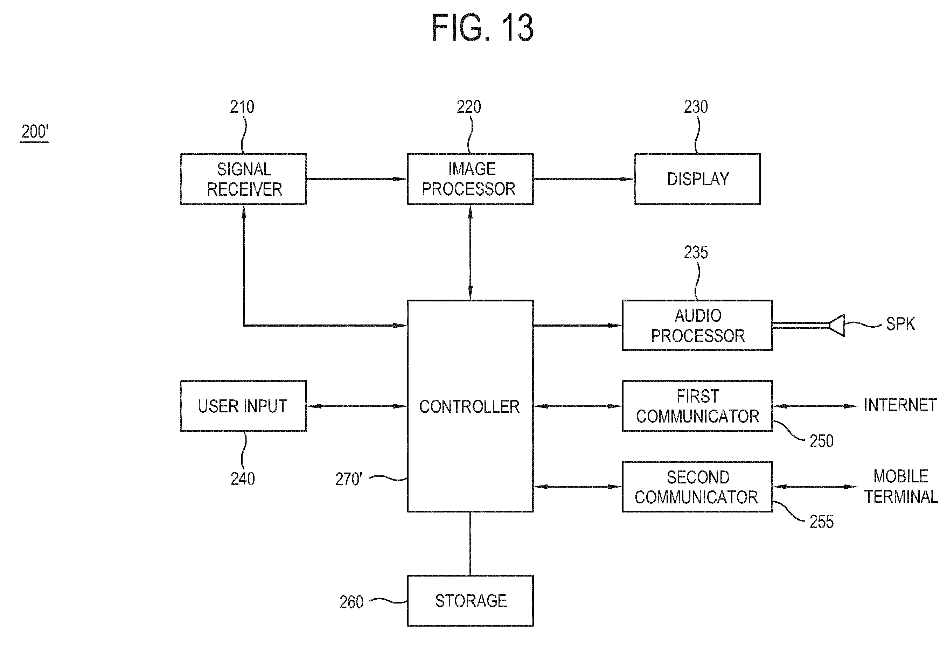

FIG. 13 is a block diagram of a display apparatus 200' according to an exemplary embodiment of the present general inventive concept.

The display apparatus 200' is the same as the display apparatus 200 in FIG. 11 except that the controller 270' further determines a display mode of the display apparatus 200' that has been input by a user based on position information of the mobile terminal 100' sensed by the sensor 170.

More specifically, the controller 270' receives the display mode determination information including the position of the mobile terminal 100' from the mobile terminal 100' through the second communicator 255, and determines the display mode of the display apparatus 200' that has been instructed by a user based on the position of the mobile terminal 100' of the received display mode determination information.

That is, when the position information of the mobile terminal 100' is the security position including the normal position (FIG. 3A), the lying position (FIG. 4A), or one of the northward position (FIG. 5A) and the southward position (FIG. 5B), the controller 270' determines that the display mode is the security mode in which the display apparatus 200' displays contents that are shareable and/or non-shareable with the third party.

At this time, the controller 270' may further take into account a user's security level included in the display mode determination information and determine the security mode in more detail. That is, when the user's security level is the second security level that is granted to a minor who accesses in the security position, the controller 270' determines that the security mode is the first security mode in which the display apparatus 200' displays the second content that is non-shareable with the third party. The second content may include the personal schedule information and personalized screen. When the user's security level is a third security level that is granted to an adult who accesses in the security position, the controller 270' determines that the security mode is the second security mode in which the display apparatus 200' displays a third content that is non-shareable with a third party. The third content may include a content inaccessible to minors and a personal information protection content (payment screen).

When the position information of the mobile terminal 100' is the general position including the bottom-up position (FIG. 3B), the turned-over position (FIG. 4B), or the other of the northward position (FIG. 5A) and the southward position (FIG. 5B), the controller 270' determines that the display mode is the general mode in which the display apparatus 200' displays a content that is shareable with the third party. In the general mode, the display apparatus 200' may display only the first content that is shareable with the third party. The first content may include a normal broadcasting channel and normal VOD content.

The controller 270' controls the display mode of the display 230 according to the determined display mode. The operation of controlling the display mode by the controller 270 according to the determined display mode is the same as the operation of the controller 270 of the display apparatus 200 in FIG. 11.

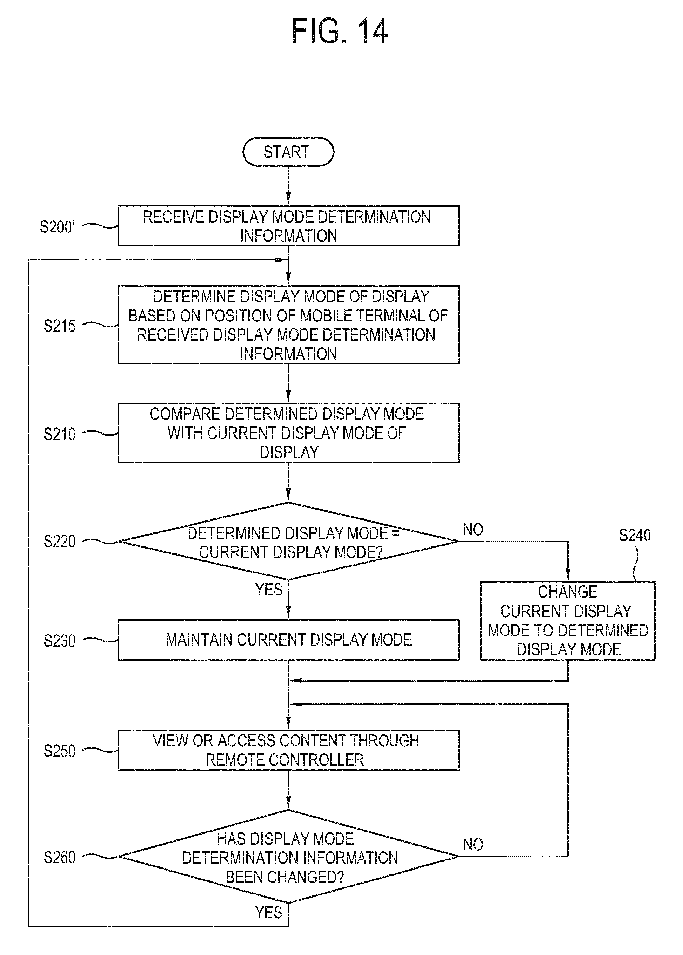

FIG. 14 is a flowchart illustrating security mode control operations of the display apparatus 200' in FIG. 13.

The operations of the display apparatus 200' are the same as the operations of the display apparatus 200 in FIG. 10, except for operations S200' and S205.

The controller 270' receives the display mode determination information including position information of the mobile terminal 100' from the mobile terminal 100' (S200'). The position of the mobile terminal 100' is assumed to be the turned-over position of the general position.

The controller 270' determines that the display mode of the display apparatus 200' input by a user is the general mode corresponding to the turned-over position of the general position, based on the position of the mobile terminal 100' of the received display mode determination information, i.e., the turned-over position of the general position (S215).

The following operations (S220' to S250') are the same as the operations of the display apparatus 200 in FIG. 10.

As described above, the mobile terminal, display apparatus and controlling methods thereof may control the display mode of the display apparatus 200 or 200' to be the general mode in which the display apparatus 200 or 200' displays the content that is shareable with the third party, and to be the security mode in which the display apparatus 200 or 200' displays the content that is non-shareable with the third party, according to the position of the mobile terminal 100 or 100'. Accordingly, the user may promptly and naturally change the content displayed by the display apparatus 200 or 200' with a simple motion when the user needs to change the content promptly.

As discussed above, embodiments of the invention can provide a mobile terminal comprising: a communicator arranged to communicate with an external display apparatus having a personalization function; a sensor arranged to sense a position of the mobile terminal; and a controller arranged to determine a display mode of the display apparatus based on the position of the mobile terminal sensed by the sensor, and to transmit display mode instruction information comprising the determined display mode to the display apparatus through the communicator.

In some embodiments, the position of the mobile terminal comprises:a general position arranged to allow the user to instruct the display apparatus to display a content that is shareable with a third party; and a security position arranged to allow the user to instruct the display apparatus to display a content that is non-shareable with a third party.

In some embodiments, the general position comprises one of a bottom-up position in which a bottom of the mobile terminal is located upward, a turned-over position in which a front surface of the mobile terminal faces down, and one of a northward position in which an upper part of the mobile terminal is directed to the north at a first angle and a southward position in which the upper part of the mobile terminal is directed to the south at a second angle; and the security position comprises one of a normal position in which the upper part of the mobile terminal is located upward, a lying position in which the front surface of the mobile terminal faces up, and the other of the northward position in which the upper part of the mobile terminal is directed to the north at the first angle and the southward position in which the upper part of the mobile terminal is directed to the south at the second angle.

In some embodiments, the general position comprises one of a bottom-up position in which a bottom of the mobile terminal is located upward, a turned-over position in which a front surface of the mobile terminal faces down, and one of a first compass position in which an upper part of the mobile terminal is directed to a first compass point at a first angle and a second compass position in which the upper part of the mobile terminal is directed to a second compass point at a second angle; and the security position comprises one of a normal position in which the upper part of the mobile terminal is located upward, a lying position in which the front surface of the mobile terminal faces up, and the other of the first compass position in which the upper part of the mobile terminal is directed to the first compass point at the first angle and the second compass position in which the upper part of the mobile terminal is directed to the second compass point at the second angle.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include a semiconductor memory device, a read-only memory (ROM), a random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. A mobile terminal comprising:
a communicator arranged to communicate with an external display apparatus having a personalization function;
a sensor arranged to sense a position of the mobile terminal; and
a controller arranged to determine a display mode of the display apparatus based on the position of the mobile terminal sensed by the sensor, and to transmit display mode instruction information comprising the determined display mode to the display apparatus through the communicator.

2. The mobile terminal according to claim 1, wherein the position of the mobile terminal comprises:
a general position arranged to allow the user to instruct the display apparatus to display a content that is shareable with a third party; and
a security position arranged to allow the user to instruct the display apparatus to display a content that is non-shareable with a third party.

3. The mobile terminal according to claim 2, wherein the general position comprises one of a bottom-up position in which a bottom of the mobile terminal is located upward, a turned-over position in which a front surface of the mobile terminal faces down, and one of a northward position in which an upper part of the mobile terminal is directed to the north at a first angle and a southward position in which the upper part of the mobile terminal is directed to the south at a second angle; and
the security position comprises one of a normal position in which the upper part of the mobile terminal is located upward, a lying position in which the front surface of the mobile terminal faces up, and the other of the northward position in which the upper part of the mobile terminal is directed to the north at the first angle and the southward position in which the upper part of the mobile terminal is directed to the south at the second angle.

4. The mobile terminal according to claim 2 or 3, wherein the position of the mobile terminal is changed by physically turning or relocating the mobile terminal by a user, or by inputting a screen changing command to the mobile terminal to change an orientation of a screen of the mobile terminal.

5. The mobile terminal according to any one of claims 1 to 4, wherein the sensor comprises at least one of an accelerometer, a gyro sensor and a geomagnetic sensor.

6. The mobile terminal according to any one of claims 2 to 5, wherein the display mode of the display apparatus comprises:
a general mode in which the display apparatus is arranged to display a content that is shareable with the third party; and
a security mode in which the display apparatus is arranged to display a content that is non-shareable with the third party.

7. The mobile terminal according to claim 6, wherein according to a user's security level, the controller is arranged to determine in more detail that the security mode is a first security mode in which the display apparatus displays a second content that is non-shareable with the third party, and a second security mode in which the display apparatus is arranged to display a third content that is non-shareable with the third party.

8. The mobile terminal according to claim 7, wherein the controller is arranged to determine that the security mode is the first security mode when the user's security level is a second security level, and to determine that the security mode is the second security mode when the user's security level is a third security level.

9. The mobile terminal according to claim 8, wherein the second security level comprises a level that is granted to a minor who accesses the display apparatus in the security position, and the third security level comprises a level that is granted to an adult who accesses the display apparatus in the security position.

10. The mobile terminal according to any one of claims 1 to 9, wherein the display mode instruction information comprises at least two of a user authentication code, a user name, a security flag which identifies whether the determined display mode is a security mode or a general mode, and a security level that is granted to a user of the mobile terminal.

11. The mobile terminal according to any one of claims 1 to 10, further comprising a cradle having a near field communication (NFC) reader to transmit a user profile of the mobile terminal stored in an NFC tag of the mobile terminal to the display apparatus and thus causing the display apparatus to authenticate the user profile when the mobile terminal is tagged, and the cradle wirelessly charges the mobile terminal.

12. A controlling method of a mobile terminal according to any of claims 1 to 11 comprising:
sensing a position of the mobile terminal;
determining a display mode of a display apparatus having a personalization function, based on the sensed position of the mobile terminal; and
transmitting display mode instruction information comprising the determined display mode to the display apparatus.

13. A display apparatus arranged to provide a personalization function comprising:
an image processor arranged to process an image signal;
a display arranged to display an image thereon based on the image signal;
a communicator arranged to communicate with a mobile terminal according to any of claims 1 to 11;
a user input arranged to receive a user's command to control the display apparatus; and
a controller arranged to receive display mode instruction information comprising a display mode of the display from the mobile terminal through the communicator, and control the display mode of the display according to the display mode of the received display mode instruction information.

14. A security mode controlling method of a display apparatus having a personalization function comprising:
receiving display mode instruction information comprising a desired display mode of the display apparatus from a mobile terminal according to any of claims 1 to 11; and
controlling a current display mode of the display apparatus according to the desired display mode of the received display mode instruction information.

15. A system to control personalization of display, comprising:
a display apparatus to receive a display mode instruction having a display mode and display a content according to the display mode instruction; and
a mobile terminal according to any of claims 1 to 11 to generate the display mode instruction having the display mode according to a position of the mobile terminal with respect to the display apparatus, such that the display mode of the display mode instruction changes in response to a change of the position of the mobile terminal such that the displayed content is changed in response to the changed display mode.
